# EUROPEAN PATENT APPLICATION

(11) **EP 2 497 560 A1**
(43) Date of publication of application: **12.09.2012**
(21) Application number: 11157338.2
(22) Date of filing: 08.03.2011
(51) Int. Cl.: B01D 53/14, B01D 53/60

(54) **A method and system for removing contaminants from a process gas**

(71) Applicant: Alstom Technology Ltd, 5400 Baden (CH)
(72) Inventor: Stallmann, Olaf, 55270 Essenheim (DE)
(74) Representative: Simonsson, Erik

(57) **Abstract**

A system for removing contaminants from a process gas comprises:
a compressor (28) configured to compress a process gas stream comprising at least nitrogen oxides, NOₓ, and/or sulphur oxides, SOₓ, and carbon dioxide, CO₂; and
a cleaning unit (48) configured to clean the compressed process gas by co-current direct contact cleaning of the compressed process gas stream with a cleaning liquid stream for removal of NOₓ and/or SOₓ, or their acid forms, from the process gas stream.

## Description

### Technical Field

The present disclosure relates to a method and a system for removing contaminants from a process gas containing carbon dioxide. The present disclosure also relates to a power plant comprising such a system.

### Background

Most of the energy used in the world today is derived from the combustion of carbon and hydrogen containing fuels such as coal, oil and natural gas, as well as other organic fuels. Such combustion generates flue gases containing high levels of carbon dioxide. Due to the concerns about global warming, there is an increasing demand for the reduction of emissions of carbon dioxide to the atmosphere, why methods have been developed to remove the carbon dioxide from flue gases before the gas is released to the atmosphere.

Prior to carbon dioxide separation, the flue gas may be cleaned from other constituents and air pollutants, such as particles, SOₓ, NOₓ, mercury and water.

There are different ways to remove the carbon dioxide from the flue gas, such as by absorption in an aminated or ammoniated solution, or by anti-sublimation or by cryogenic distillation. Depending on which way is used, the carbon dioxide rich flue gas may be e.g. compressed and/or chilled in preparation for carbon dioxide removal.

In order to reduce the amount of flue gas, and thus the dimensions of a power plant and its gas cleaning arrangements, as well as to facilitate the purification and removal of carbon dioxide, oxygen may be used instead of air in a combustion furnace, so called oxy-fuel combustion, generating a flue gas with a high carbon dioxide concentration and a low nitrogen concentration.

### Summary

According to an aspect of the present disclosure, there is provided a method for removing contaminants from a process gas, the method comprising: providing a process gas stream comprising nitrogen oxides, NOₓ, and/or sulphur oxides, SOₓ, and carbon dioxide, CO₂; compressing said process gas stream; and cleaning said compressed process gas stream for removal of NOₓ and/or SOₓ, or their acid forms, from the process gas stream; wherein the cleaning comprises co-current direct contact cleaning of the process gas stream with a cleaning liquid.

An advantage of this method is that efficient removal of NOₓ, and/or sulphur oxides, SOₓ, is obtained with a low process gas pressure drop, and at a low cleaning liquid pumping power consumption.

According to another aspect of the present disclosure, there is provided a system for removing contaminants from a process gas, the system comprising: a compressor configured to compress a process gas stream comprising at least nitrogen oxides, NOₓ, and/or sulphur oxides, SOₓ, and carbon dioxide, CO₂; and a cleaning unit configured to clean the compressed process gas by co-current direct contact cleaning of the compressed process gas stream with a cleaning liquid stream for removal of NOₓ and/or SOₓ, or their acid forms, from the process gas stream.

According to another aspect of the present disclosure, there is provided a power plant comprising the system of the above aspect. Said power plant may e.g. be an oxy-fuel combustion power plant.

Discussions above and below relating to any one of the respective aspects of the present disclosure are also, in applicable parts, relevant to any of the other aspects.

By using co-current cleaning, i.e. allowing the cleaning liquid to flow in the same direction as the process gas in the cleaning unit during cleaning of the process gas, a low loss of the process gas pressure may be obtained, reducing the strain, and requirement put, on the compressor or such used for compressing the process gas. Thus, cost savings may be made in that a smaller compressing means, i.e. a compressing means configured for less compression work, may be used, the energy needed for compression may be reduced and the maintenance of the compressing means may be reduced due to the reduced work of the compressing means. Direct contact with the cleaning liquid may also be used to cool the process gas if desired, using the cleaning liquid as a cooling medium.

According to one embodiment, said compressing is a part of a multistage compressing, and the cleaning is interstage cleaning of said process gas stream between compression stages of the multistage compression. An advantage of this embodiment is that the cooling of the process gas, which is often needed between compression stages of a multistage compression, may be combined with cleaning the process gas, thereby achieving an efficient process with few devices needed.

According to one embodiment, the method further comprises indirect cooling of the process gas stream during the cleaning of said process gas stream, by means of a heat exchanger and a cooling medium. An advantage of this embodiment is that cooling of the process gas is made more efficient, and so is the removal of the NOₓ and/or SOₓ.

According to one embodiment, a vertical shell and tube heat exchanger is utilized, with the cleaning liquid forming a falling film on an inner surface of a tube of the heat exchanger, within which tube the process gas flows co-currently with the cleaning liquid falling film, the cooling medium indirectly exchanging heat with the cleaning liquid and the process gas from an outer surface of said tube. An advantage of this embodiment is that both cleaning and cooling of the process gas is conducted in a very efficient manner, with minimum risks of corrosion, at a low energy consumption, and with low pressure drop on the process gas.

According to one embodiment at least a portion of the cleaning liquid is recirculated, after being cooled by the cooling medium, to be brought into contact with process gas once more. An advantage of this embodiment is that the cleaning liquid may contribute to efficient cooling of the process gas.

Further objects and features of the present invention will be apparent from the description and the claims.

### Brief Description of the Drawings

Currently preferred embodiments will below be discussed with reference to the drawings, in which:
Fig. 1 is a schematic illustration of an embodiment of a system in accordance with the present disclosure.
Fig. 2 is a schematic illustration of a vertical shell and tube heat exchanger of the system of Fig. 1.
Fig. 3a is an enlarged side-view of a mixing section of the heat exchanger of Fig. 2.
Fig. 3b is an enlarged top-view of a mixing section of the heat exchanger of Fig. 2.
Fig. 4a is an enlarged side-view of a mixing section in accordance with an alternative embodiment.
Fig. 4b is an enlarged top-view of a mixing section of the alternative embodiment illustrated in Fig. 4a.
Fig. 5 is an enlarged side view illustrating tubes of the heat exchanger of Fig. 2.
Fig. 6 is a schematic process chart of an embodiment of a method in accordance with the present disclosure.

### Detailed Description of Exemplary Embodiments

The system and power plant of the present disclosure comprises piping that connects their different parts and is arranged to allow respective fluids and gases to flow or be transported through the system/power plant as needed. The piping may comprise conduits, valves, pumps, conveyors, compressors, fans, expanders, nozzles, heat exchangers etc. as appropriate to control the flow/transportation and properties of respective fluids and gases.

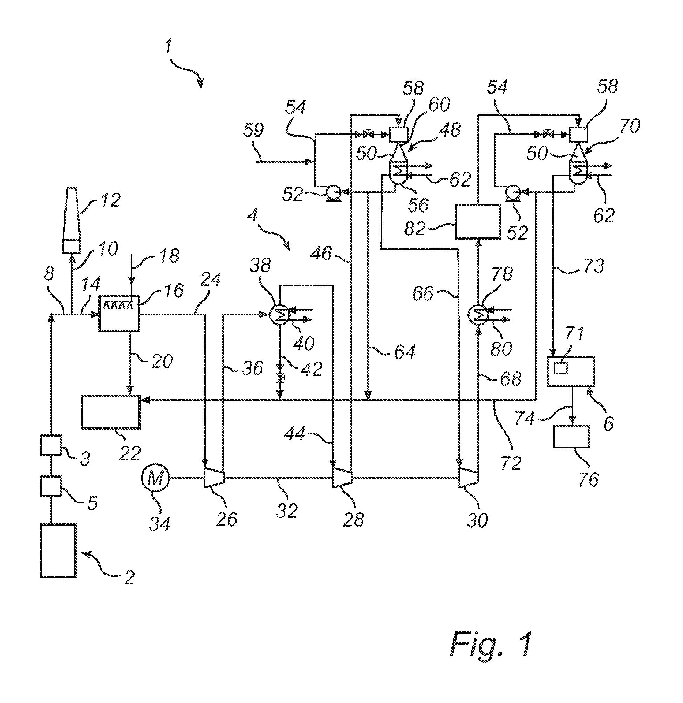

Fig. 1 illustrates a power plant 1. The power plant comprises a power boiler system 2, a compression unit 4, and a gas compression and separation unit 6.

The power boiler system 2 may typically be a per se known oxy-fuel combustion boiler system 2, an example of which is known from EP 1844842, and in which a fuel, such as coal, oil, peat, or natural gas, is combusted in the presence of oxygen gas and recirculated process gas. As a result of the combustion in the boiler system 2 a process gas, which is often referred to as flue gas, is generated in the boiler system 2, and is transported from the boiler system 2 via a duct 8.

Optionally, the boiler system 2 may comprise a wet scrubber 3, for example a per se known wet scrubber of the type disclosed in EP 0 162 536, for removing a portion, typically 80-99%, of an amount of sulphur dioxide, SO₂, of the process gas prior to the process gas leaving the boiler system 2 via the duct 8. Furthermore, the boiler system 2 may also comprise a NOₓ removal device 5, for example a NOₓ removal device of the type illustrated in US 6,146,605 for removing a portion, typically 60-95%, of an amount of nitrogen oxides, NOₓ, of the process gas prior to the process gas leaving the boiler system 2 via the duct 8.

Typically, the process gas of the duct 8 may be a "carbon dioxide rich flue gas", by which is meant that the flue gas leaving the oxy-fuel combustion boiler system 2 via the duct 8 will contain at least 40 % by volume of carbon dioxide, CO₂. Often more than 50% by volume of the flue gas leaving the oxy-fuel combustion boiler system 2 will be carbon dioxide. The balance of the "carbon dioxide rich flue gas" will be about 20-50% by volume of water vapour (H₂O), 2-7 % by volume of oxygen (O₂), since a slight oxygen excess is often preferred in the boiler 2, and totally about 0-20 % by volume of other gases, including mainly nitrogen (N₂) and argon (Ar), since some leakage of air can seldom be completely avoided. Optionally, a by-pass duct 10 may be arranged for temporarily forwarding the process gas to a stack 12 for release to the atmosphere during, for example, start-up and process set ups.

In normal operation mode, however, the process gas is forwarded, via a duct 14, to a condenser 16. A cooling and cleaning medium, such as water, is supplied to the condenser 16 by a supply pipe 18 and is brought into direct contact with the process gas in the condenser 16. The cooling and cleaning medium causes a cooling of the process gas, and causes at least some of the water vapour content of the process gas to condense. Furthermore, the cooling and cleaning medium absorbs at least a portion of the sulphur dioxide, SO₂, content of the process gas. The used cooling and cleaning medium, including formed condensate, and removed sulphur dioxide, is forwarded, via a pipe 20, from the condenser 16 to a waste water treatment plant 22. Optionally, a portion of the used cooling and cleaning medium could be circulated back to the condenser 16.

The cooled process gas is then forwarded, via a duct 24, to the compression unit 4. The compression unit 4 comprises a compressor having typically 2 to 5 compression stages. In the embodiment illustrated in Fig. 1, the compressor of the compression unit 4 comprises a first compression stage 26, a second compression stage 28, and a third compression stage 30. The compression stages 26, 28, 30 are arranged on a common shaft 32 and are driven by a common motor 34.

The first compression stage 26 causes a compression of the process gas, typically a compression from an atmospheric pressure to an absolute pressure of 3-5 bar. Compressed gas is forwarded, via a duct 36, to an intermediate cooler 38. The intermediate cooler 38 is provided with a cooling circuit 40 via which a cooling medium, such as water, is supplied to the intermediate cooler 38. As a result of cooling in the intermediate cooler 38, the process gas temperature is reduced from about 100-250°C to about 60-90°C. The cooling in the cooler 38 may result in a further condensation of water vapour from the process gas. Condensate generated as an effect of such cooling may leave the cooler 38 via a pipe 42 to be forwarded to the water treatment plant 22.

The cooled process gas is forwarded, via a duct 44, to the second compression stage 28. The second compression stage 28 causes a compression of the process gas, typically a compression from an absolute pressure of 3-5 bar to an absolute pressure of 10-15 bar. As an effect of such compression, the temperature of the compressed gas is increased to about 100-250°C. Compressed gas is forwarded, via a duct 46, to a first cleaning unit 48.

The first cleaning unit 48 comprises a vertical shell and tube heat exchanger 50, a pump 52 for pumping, in a circulation pipe 54, a cleaning liquid from a bottom 56 of the heat exchanger 50 to a mixing section 58 arranged at a top 60 of the heat exchanger 50, and a cooling circuit 62 for circulating a cooling medium, such as water, to cool the process gas being forwarded through the heat exchanger 50.

The cleaning liquid, which may typically be water, is, by means of the pump 52, pumped to the mixing section 58. Optionally, a caustic, such as sodium hydroxide, NaOH, or ammonia, NH₃, may be supplied, via pipe 59, to the cleaning liquid in the circulation pipe 54 to maintain a stable pH value, such as a pH value of 5-8. In the mixing section 58 the cleaning liquid is brought into direct contact with the compressed process gas coming from the second compression stage 28. Upon such direct contact, the process gas is cooled, as an effect of the contact with the cleaning liquid. Typically, the temperature inside the mixing section 58 is around 50-70°C

The conditions inside the mixing section 58, i.e., a process gas at elevated pressure, a temperature of less than 70°C, and presence of liquid water promotes formation of acids from NOₓ and/or SOₓ. With NOₓ in an oxygen containing environment, nitrogen oxide, NO, is in equilibrium with nitrogen dioxide, NO₂. Under the conditions prevailing in the compression unit 4 the NOₓ equilibrium is on the side of nitrogen dioxide, NO₂. Nitrogen dioxide, NO₂, catalyses the oxidation of sulphur dioxide, SO₂, to sulphur trioxide, SO₃. At the conditions in the mixing section 58, the sulphur trioxide, SO₃, will react with water to form acids, H₂SO₃ and H₂SO₄, that are collected in the cleaning liquid. The reaction of forming acids, and collecting them in the cleaning liquid continues inside the actual heat exchanger 50. Nitrogen dioxide, NO₂, may also react with water to form the corresponding acid, HNO₃. However, when catalysing the reaction of oxidising SO₂ to SO₃, the NO₂ is reduced back to NO. The oxidation of NO to NO₂ is a comparably slow process. Hence, the process gas leaving the first cleaning unit 48 will still contain some NOₓ.

To summarize, the cleaning liquid circulated in the first cleaning unit 48 absorbs at least a portion of the NOₓ and/or SOₓ, or their acid forms, of the compressed process gas. The absorption of the NOₓ and/or SOₓ, or their acid forms, continues as the cleaning liquid travels vertically downwards, inside tubes of the heat exchanger 50, as will be described in more detail hereinafter, in direct contact with the process gas, also travelling vertically downwards, hence effecting co-current direct contact cleaning of the compressed process gas stream with the cleaning liquid.

Cooling medium, such as water having a temperature of, for example, 10-30°C, is supplied via the cooling circuit 62. The cooling medium could, for example, be cooled in a cooling tower or a chiller. The cooling medium cools the outside of the tubes in which the cleaning liquid and the process gas is forwarded, as described in more detail hereinafter, and hence achieves an indirect cooling of the process gas, and of the cleaning liquid flowing inside the tubes. The amount of cleaning liquid supplied to the first cleaning unit 48 need only be large enough to cause a cooling of the process gas in the mixing section 58, and to wet the insides of the tubes of the heat exchanger 50. Hence, the amount of liquid circulated by the pump 52 can be relatively small, since the main cooling effect is achieved by means of the cooling circuit 62 cooling the process gas indirectly. Compared to a direct cooling system the total pumping power, i.e., the combined power of the pump 52, plus the power of pumping liquid in cooling circuit 62, is reduced, since in a direct cooling system a heat exchanger would need to be arranged in the circulation pipe 54, and be supplied with a similar amount of cooling liquid as that of the cooling circuit 62, but the amount of liquid circulated in such circulation pipe 54 would need to be increased significantly to be able to transfer that entire amount of heat from the process gas.

At the bottom 56 of the heat exchanger 50 the process gas and the cleaning liquid are separated from each other. The cleaning liquid, cooled to a temperature of, typically, 15-40°C, being substantially the same as the temperature of the process gas at bottom 56, is returned to the pump 52 via the circulation pipe 54. Cooling the process gas to a temperature of less than 15°C is often less preferred, since solid carbon dioxide hydrate may form inside the heat exchanger 50. The carbon dioxide hydrate is a solid hydrate of carbon dioxide and water formed at elevated pressures and low temperatures, see for example Tamman, G. & Krige, G. J. (1925): "Equilibrium pressures of gas hydrates." Zeit. Anorg. und Algem. Chem., 146, pp. 179-195. Formation of solid carbon dioxide hydrates would be detrimental to the function of the heat exchanger 50, and should, hence, be avoided. Cooling the process gas to a temperature which is higher than 40°C is also less preferable, since the rate of conversion of SO₂ to SO₃, and of NO to NO₂ is reduced, resulting in less efficient cleaning in the gas cleaning unit 48. As an effect of the cooling of the process gas inside the heat exchanger 50 some condensation of water vapour may occur. A pipe 64 is arranged for forwarding a bleed stream of excess liquid from the circulation pipe 54 to the waste water treatment plant 22.

The first cleaning unit 48 provides, as described hereinbefore, for an interstage cleaning of the process gas between the second and third compression stages 28, 30. Furthermore, an interstage cooling of the process gas between the compression stages 28, 30 is also achieved. The process gas, having a temperature of, typically, 15-40°C, and having a very low content of SO_{X}, but still comprising some NOₓ, is forwarded, via a duct 66, to the third compression stage 30. The third compression stage 30 causes a compression of the process gas, typically a compression from an absolute pressure of 10-15 bar to an absolute pressure of 30-40 bar. As an effect of such compression, the temperature of the compressed gas is increased to about 100-250°C. Compressed gas is forwarded, via a duct 68, to a second cleaning unit 70. The second cleaning unit 70 may comprise similar devices, including a vertical shell and tube heat exchanger 50, a pump 52 for pumping a cleaning liquid in a circulation pipe 54, a mixing section 58, and a cooling circuit 62, as the first cleaning unit 48 and will not be described in any detail. Inside the mixing section 58, NO₂ will react with water to form the corresponding acid, HNO₃, which is absorbed in the cleaning liquid being circulated in the second cleaning unit 70. Thus, the first cleaning unit 48 serves as the main unit for removing SO_{X} and NOₓ, with the second cleaning unit 70 serving mainly as a polishing unit, removing, in particular, NOₓ.

Excess liquid is transported from the circulation pipe 54 of the second cleaning unit 70, via a pipe 72, to the waste water treatment plant 22. The process gas, from which at least a portion of its content of NOₓ and/or SOₓ, or their acid forms, has been removed, is forwarded to the gas compression and separation unit 6 via a duct 73. The gas compression and separation unit 6 may typically comprise a drier 71 comprising a desiccant, such desiccant may, for example, be silica gel, calcium sulphate, calcium chloride, montmorillonite clay, molecular sieves, or another material that is, as such, known for its use as a desiccant, for removing trace amounts of water vapour from the process gas prior to high pressure compression of the process gas. Many desiccants are sensitive to acids, and may get destroyed by the SO_{X} and NOₓ content of the process gas, or the acids formed from SO_{X} and NOₓ, such acid formation might even occur on the desiccant itself, unless properly removed in the first and second cleaning units 48, 70. In the gas compression and separation unit 6, the process gas is typically cleaned, by means of the dryer 71, oxygen gas and nitrogen gas is removed from the process gas, for example by means of cryogenic methods, and the resulting rather pure carbon dioxide is compressed, typically to an absolute pressure of 90-250 bar, in accordance with per se known methods. The pressurized carbon dioxide is then forwarded, via a duct 74, to carbon dioxide sequestration 76.

Optionally, a heat exchanger 78 may be provided at the duct 68. A cooling circuit 80 is provided in the heat exchanger 78 for cooling, by means of a cooling medium, such as water, the compressed process gas to a temperature of, typically, 50-70°C before introducing the process gas into an optional trace removal device 82 provided at the duct 68, in a location between the heat exchanger 78 and the second cleaning unit 70. The trace removal device 82 may, for example, comprise an adsorbent, such as, for example, activated carbon impregnated with sulphur, or another material that is, as such, known for its affinity for trace components, such as mercury.

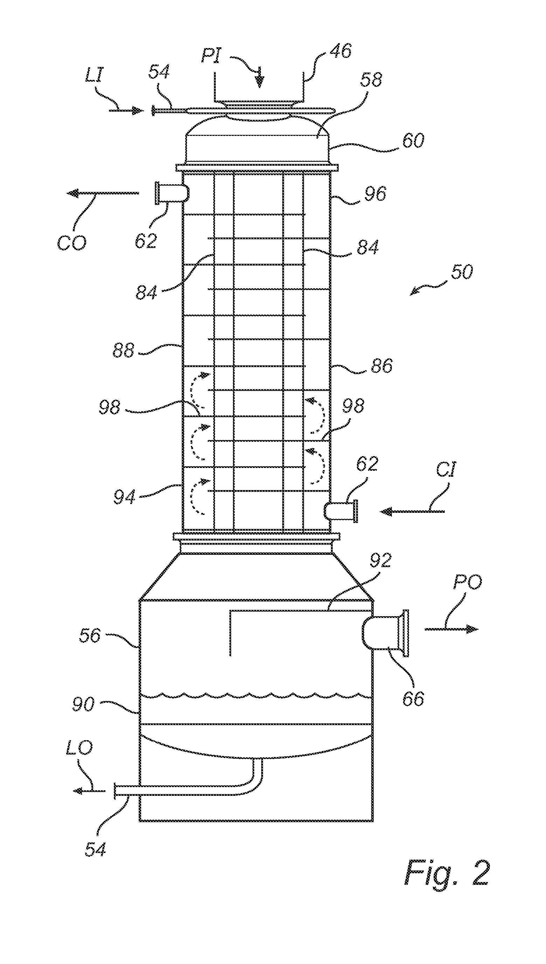

Fig. 2 illustrates the vertical shell and tube heat exchanger 50 in more detail. Process gas is supplied, via duct 46, to the mixing section 58 arranged at the top 60 of the heat exchanger 50, as indicated by the arrow PI. Cleaning liquid, illustrated by arrow LI, is supplied, via circulation pipe 54 to the mixing section 58 arranged at the top 60 and mixes, in said mixing section 58, with the process gas, as will be described in more detail hereinafter. The mixture of process gas and cleaning liquid flows vertically downwards inside of heat exchanger tubes 84 arranged in a central portion 86 of a shell 88 the heat exchanger 50. The cleaning of said compressed process gas stream for removal of NOₓ and/or SOₓ, or their acid forms, from the process gas stream hence occurs in co-current direct contact cleaning of the process gas stream with the cleaning liquid inside the tubes 84.

In Fig. 2 only two tubes 84 are illustrated, but it will be appreciated that the heat exchanger 50 may typically comprise 10 to 10 000 such tubes 84. The tubes 84 extend from the mixing section 58 and vertically downwards to a separation vessel 90 arranged in the bottom 56 of the heat exchanger 50. In the separation vessel 90, the process gas is separated from the cleaning liquid. The process gas leaves, as a flow PO, the heat exchanger 50 via duct 66 connected to the separation vessel 90. A liquid baffle 92 prevents entrainment of the cleaning liquid into the process gas to the duct 66.

The cleaning liquid is collected at the lowest portion of the separation vessel 90, and is returned to the pump 52 via the circulation pipe 54, as illustrated by arrow LO.

The cooling medium is, as illustrated by arrow CI, supplied via cooling circuit 62 to a lower end 94 of the central portion 86. The cooling medium then flows upwards inside the shell 88, and on the outside of the tubes 84. Hence, the cooling medium cools indirectly, without any direct contact, the process gas and the cleaning liquid flowing downwardly inside the tubes 84. The cooling medium leaves the shell 88 via cooling circuit 62 at an upper end 96 of the central portion 86, as illustrated by an arrow CO. Inside the shell 88 a number of deflection baffles 98, through which the tubes 84 extend, may optionally be arranged. The baffles 98 subdivide the cooling medium flow into cross sectional and upward segments in a step-wise manner, as illustrated by dashed arrows in Fig. 2, thereby improving the cooling effect. The general flow direction of the cooling medium is vertically upwards. Hence, the overall cooling medium flow is counter-current to the process gas and the cleaning liquid.

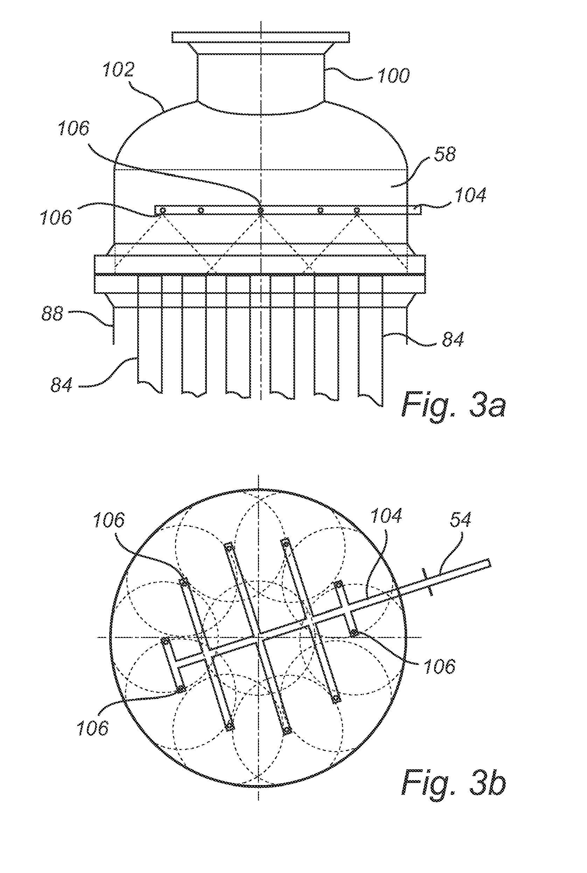

Figs. 3a and 3b illustrate the mixing section 58 of the heat exchanger 50 of Fig. 2 in more detail. An inlet 100, to which the duct 46 is connected, is arranged at the top 102 of the mixing section 58. Inside the mixing section 58 a liquid distribution grid 104 is arranged, the liquid distribution grid 104 having the shape of a ladder, as is best illustrated in Fig. 3b. The liquid distribution grid 104 is connected to the circulation pipe 54. Atomizing nozzles 106 are distributed over the liquid distribution grid 104 to evenly mix the cleaning liquid with the process gas, and to distribute the cleaning liquid over the tubes 84. Fig. 3b illustrates the spray patterns of the atomizing nozzles 106, as seen from above.

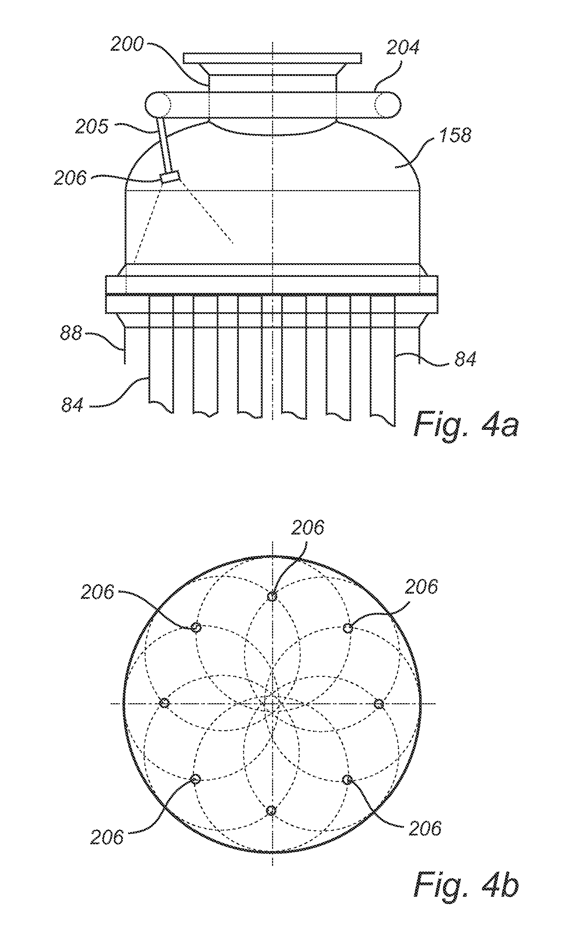

Figs. 4a and 4b illustrate a mixing section 158 in accordance with an alternative embodiment. The difference between the mixing section 158 and the mixing section 58 illustrated in Figs. 3a-b is that the mixing section 158 comprises an annular ring-distributor 204 encircling an inlet 200. The ring-distributor 204 supplies via inlet pipes, of which only one pipe 205 is illustrated in Fig. 4a, cleaning liquid to atomizing nozzles 206 evenly mixing the cleaning liquid with the process gas, and distributing the cleaning liquid over the tubes 84, the spray patterns of the nozzles 206 being illustrated in Fig. 4b.

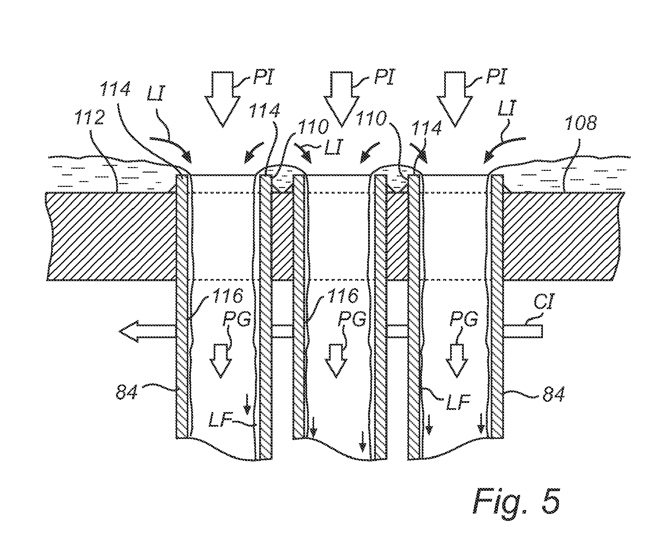

Fig. 5 illustrates the tubes 84 of the heat exchanger 50 of Fig. 2. The tubes 84 are mounted in a horizontal plate 108. The upper ends 110 of the tubes 84 extend above the upper surface 112 of the horizontal plate 108. Hence, the upper ends 110 of the tubes 84 will form weirs 114 over which the cleaning liquid LI will flow when flowing into the tubes 84. The weirs 114 ensure that a similar amount of cleaning liquid flows into each tube 84. Furthermore, due to the weirs 114 the upper surface 112 of the horizontal plate 108 is kept wet, which reduces the risk of corrosion, which may occur under semi-wet conditions. As depicted in Fig. 5, the cleaning liquid LI flows over the weirs 114 and then vertically downwards, in the form of a liquid film LF in direct contact with the process gas PG, along the inner side of the tubes 84. An advantage of this is that inner faces 116 of the tubes 84 will be kept wetted all the time, which reduces the risk of formation of wet dry zones, and corrosion inside the tubes 84. Furthermore, an efficient cleaning of the process gas PG is also achieved due to the direct contact with the liquid film LF. With a similar amount of cleaning liquid LI flowing into each heat exchanger tube 84, the risk of uneven distribution of process gas PI between the tubes 84 is reduced. The cleaning liquid LI flowing co-currently with the process gas PG, vertically downwards inside the tubes 84, will exert a dragging force on the process gas PG, dragging the process gas PG vertically downwards, in the intended flow direction of the process gas PG. This reduces the gas side pressure drop over the heat exchanger 50. An arrow CI illustrates, schematically, how the cooling medium flows on the outside of the tubes 84 to achieve an indirect cooling of the film LF of cleaning liquid LI, and of the process gas PG.

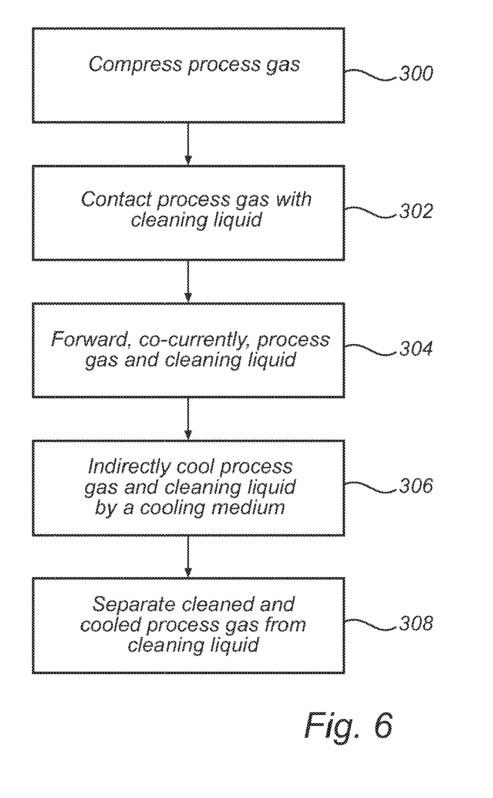

Fig. 6 is a schematic process chart of an embodiment of a method in accordance with the present disclosure. In a first step 300, the process gas, comprising carbon dioxide, CO₂ and SO_{X} and/or NOₓ, is compressed. In a second step 302, the compressed process gas is brought into direct contact with the cleaning liquid. In a third step 304, the compressed process gas is forwarded, co-currently with the cleaning liquid and in direct contact therewith, vertically downwards. In a fourth step 306, the compressed process gas and the cleaning liquid is indirectly cooled by means of a cooling medium. The process gas and the cleaning liquid may, as described hereinbefore, flow inside heat exchanger tubes 84, with the cooling medium flowing on the outside of the tubes 84. In a fifth step 308, the cleaning liquid is separated from the cleaned and cooled compressed process gas.

It will be appreciated that numerous variants of the embodiments described above are possible within the scope of the appended claims.

Hereinbefore, it has been described that the compression unit 4 is provided with a first cleaning unit 48, and a second cleaning unit 70. It will be appreciated that, in accordance with alternative embodiments, the compression unit 4 could be provided with a single cleaning unit 48 if that is, under the process conditions present in that case, sufficient to achieve a suitable removal of NOₓ and/or SOₓ. Furthermore, it is also possible, in case the cleaning requirements are very strict, to utilize more than two cleaning units 48, 70. For example, in the compression unit 4 illustrated in Fig. 1, it would be possible to include a further cleaning unit immediately downstream of the first compression stage 26, replacing the intermediate cooler 38.

To summarize, a system for removing contaminants from a process gas comprises:
a compressor 28 configured to compress a process gas stream comprising at least nitrogen oxides, NOₓ, and/or sulphur oxides, SOₓ, and carbon dioxide, CO₂; and
a cleaning unit 48 configured to clean the compressed process gas by co-current direct contact cleaning of the compressed process gas stream with a cleaning liquid stream for removal of NOₓ and/or SOₓ, or their acid forms, from the process gas stream.

While the invention has been described with reference to a number of preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best mode currently contemplated for carrying out this invention, but that the invention will include all embodiments falling within the scope of the appended claims. Moreover, the use of the terms first, second, etc. do not denote any order or importance or chronology, but rather the terms first, second, etc. are used to distinguish one element from another.

## Claims

1. A method for removing contaminants from a process gas, the method comprising:
providing a process gas stream comprising nitrogen oxides, NOₓ, and/or sulphur oxides, SOₓ, and carbon dioxide, CO₂;
compressing said process gas stream; and
cleaning said compressed process gas stream for removal of NOₓ and/or SOₓ, or their acid forms, from the process gas stream,
wherein the cleaning comprises co-current direct contact cleaning of the process gas stream with a cleaning liquid.

2. The method of claim 1, wherein said compressing is a part of a multistage compressing, and the cleaning is interstage cleaning of said process gas stream between compression stages (28, 30) of the multistage compression.

3. The method of claim 2, further comprising post-compression cleaning of said compressed process gas stream downstream of the multistage compression, wherein the post-compression cleaning comprises co-current direct contact cleaning of the process gas stream with a cleaning liquid.

4. The method of any one of the preceding claims, further comprising indirect cooling of the process gas stream during the cleaning of said process gas stream, by means of a heat exchanger (50) and a cooling medium.

5. The method of claim 4, wherein the heat exchanger is a vertical shell and tube heat exchanger (50) where the cleaning liquid (LI) forms a falling film (LF) on an inner surface (116) of a tube (84) of the heat exchanger (50), within which tube (84) the process gas (PG) flows co-currently with the cleaning liquid falling film (LF), the cooling medium (CI) indirectly exchanging heat with the cleaning liquid (LI) and the process gas (PG) from an outer surface of said tube (84).

6. The method of claim 5, further comprising recirculating at least a portion of the cleaning liquid (LI), after being cooled by the cooling medium (CI), to be brought into contact with process gas (PG) once more.

7. The method of any one of the preceding claims, further comprising primary removal of SOₓ and/or NOₓ from the process gas upstream of the compression.

8. The method of any one of the preceding claims, further comprising removal of water from the process gas by condensation upstream of the compression.

9. The method of any one of the preceding claims, further comprising removal of water from the process gas by adsorption and/or absorption downstream of the compression.

10. The method of any one of the preceding claims, wherein the cleaned and compressed process gas stream is treated further to obtain a CO₂ gas that is sent to CO₂ sequestration.

11. The method of any one of the preceding claims, wherein the process gas is a flue gas from a power plant, such as an oxy-fuel combustion power plant.

12. A system for removing contaminants from a process gas, the system comprising:
a compressor (26, 28, 30) configured to compress a process gas stream comprising at least nitrogen oxides, NOₓ, and/or sulphur oxides, SOₓ, and carbon dioxide, CO₂; and
a cleaning unit (48; 70) configured to clean the compressed process gas by co-current direct contact cleaning of the compressed process gas stream with a cleaning liquid stream for removal of NOₓ and/or SOₓ, or their acid forms, from the process gas stream.

13. The system of claim 12, wherein the cleaning unit (48; 70) comprises a heat exchanger (50) configured for indirect cooling of the process gas stream during the cleaning of said process gas stream, by means of a cooling medium.

14. The system of claim 13, wherein the heat exchanger is a vertical shell and tube heat exchanger (50) configured for the cleaning liquid (LI) to form a falling film (LF) on an inner surface (116) of a tube (84) of the heat exchanger (50), within which tube (84) the process gas (PG) is to flow co-currently with the cleaning liquid falling film (LF), the cooling medium (CI) indirectly exchanging heat with the cleaning liquid (LI) and the process gas (PG) from an outer surface of said tube (84).

15. The system of any one of claims 12-14, wherein the compressor is a multistage compressor (26, 28, 30) and the cleaning unit is an interstage cleaning unit (48) configured to clean the process gas stream between compressor stages (28, 30) of the multistage compressor.

16. A power plant comprising the system of any one of claims 12-15.
